# EUROPÄISCHE PATENTSCHRIFT

(11) **EP 2 883 770 B1**
(45) Veröffentlichungstag und Bekanntmachung des Hinweises auf die Patenterteilung: **14.06.2023**
(21) Anmeldenummer: 14002668.3
(22) Anmeldetag: 31.07.2014
(51) Int. Cl.: B60W 30/14, B60W 50/08, B60W 50/14

(54) **VERFAHREN ZUR VERWENDUNG EINER GESCHWINDIGKEITSREGELANLAGE IN EINEM FAHRZEUG**
METHOD FOR USE OF A SPEED CONTROL SYSTEM IN A VEHICLE
PROCÉDÉ D'UTILISATION D'UN SYSTÈME DE RÉGLAGE DE VITESSE DANS UN VÉHICULE

(30) Priorität: 13.12.2013 DE 102013021006
(43) Veröffentlichungstag der Anmeldung: 17.06.2015
(73) Patentinhaber: MAN Truck & Bus SE, 80995 München (DE)
(72) Erfinder: Hoffmann, Guido, 82216 Maisach (DE)
(74) Vertreter: Liebl, Thomas

(56) Entgegenhaltungen:
- DE-A1- 10 101 332
- DE-A1- 10 303 010
- DE-A1-102007 005 245
- DE-A1-102013 003 215
- DE-A1-102013 205 609
- FR-A1- 2 976 866
- GB-A- 2 454 516
- US-A1- 2007 271 020

## Beschreibung

Die Erfindung betrifft ein Verfahren zur Verwendung einer Geschwindigkeitsregelanlage in einem Kraftfahrzeug nach dem Oberbegriff des Anspruchs 1.

Geschwindigkeitsregelanlagen, auch als Tempomat bezeichnet, sind allgemein bekannte Fahrerassistenzsysteme zur Unterstützung des Fahrers bei der Fahraufgabe. Nach Einschalten der Geschwindigkeitsregelanlage wird von einem Fahrer an einem Sollwertgeber durch eine Sollwertvorgabe (oder durch Übernahme der aktuellen Geschwindigkeit) ein Geschwindigkeitssollwert für eine gewünschte Sollgeschwindigkeit eingestellt, worauf die Geschwindigkeitsregelung diese Sollgeschwindigkeit im weiteren Fahrbetrieb entsprechend der technischen Möglichkeiten einhält.

Es sind auch bereits eine weiterentwickelte sogenannte adaptive Geschwindigkeitsregelanlagen, (ACC = Adaptive Cruise Control) auch als Abstandsregeltempomat bezeichnet, allgemein bekannt, wobei zusätzlich zur Geschwindigkeitsregelung der Abstand zu einem vorausfahrenden Fahrzeug als zusätzliche Rückführ- und Stellgröße einbezogen wird.

Sowohl eine normale Geschwindigkeitsregelanlage als auch eine adaptive Geschwindigkeitsregelanlage tragen effektiv zur Unterstützung und Entlastung des Fahrers bei, zumindest so lange vom Fahrer keine Geschwindigkeitsbeschränkungen oder -aufhebungen zu beachten sind. Solche Geschwindigkeitsbeschränkungen und -aufhebungen werden durch Verkehrszeichen angezeigt, auf denen entweder eine zulässige Höchstgeschwindigkeit angegeben, bzw. aufgehoben ist oder mit Verkehrszeichen, wie beispielsweise Ortseingangsschilder und Ortsausgangsschilder sind geschwindigkeitsbegrenzte Zonen angegeben. Solche Streckenabschnitte mit zulässigen Höchstgeschwindigkeiten sind mittlerweile häufig auf Bundesstraßen, Landstraßen, Ortsdurchfahrten und Autobahnen anzutreffen.

Dabei kann die Fahrt mit einer aktivierten Geschwindigkeitsregelanlage für den Fahrer mit einigem Betätigungsaufwand verbunden sein: Wenn der Fahrer ein Verkehrszeichen für eine Geschwindigkeitsbeschränkung erkennt und mit höher eingestellter Sollgeschwindigkeit unterwegs ist, muss er diese reduzieren und den eingestellten Geschwindigkeitssollwert üblicherweise durch eine Hebelbetätigung oder eine kurze Bremsbetätigung deaktivieren. Zweckmäßig versucht dann der Fahrer mit der zulässigen Höchstgeschwindigkeit weiterzufahren, einerseits um keinen Fahrzeitverlust in Kauf zu nehmen und andererseits diese zulässige Höchstgeschwindigkeit nicht strafbar zu überschreiten. Dies gelingt am besten, wenn wiederum mit der Geschwindigkeitsregelanlage mit einem Geschwindigkeitssollwert entsprechend der zulässigen Höchstgeschwindigkeit weitergefahren wird. Dazu muss der Fahrer entweder am Sollwertgeber einen Geschwindigkeitssollwert entsprechend der Höchstgeschwindigkeit anfahren und aktivieren oder warten bis das Fahrzeug auf diese zulässige Höchstgeschwindigkeit abgebremst hat und diese durch Tastendruck als weiteren Geschwindigkeitssollwert übernehmen. Wenn die Geschwindigkeitsbegrenzung aufgehoben wird, sind die vorstehenden Betätigungen in umgekehrter Reihenfolge wieder vorzunehmen, so dass dann das Fahrzeug mit der ursprünglich eingestellten Sollgeschwindigkeit wieder weiterfährt. Insbesondere bei häufigen Wechseln von Geschwindigkeitsbeschränkungen kann damit die Unterstützung des Fahrers und der Komfort durch eine Geschwindigkeitsregelanlage merklich eingeschränkt sein.

Weitere Geschwindigkeitsregelanlagen sind aus DE 10 2013 003215 A1 und DE 10 2007 005245 A1 bekannt.

Aufgabe der Erfindung ist es, eine Geschwindigkeitsregelanlage so weiterzubilden, dass die Unterstützung des Fahrers bei der Fahraufgabe durch eine Geschwindigkeitsregelanlage insbesondere bei Fahrten mit Geschwindigkeitsbeschränkungen und/oder Aufhebungen verbessert wird.

Diese Aufgabe wird gelöst mit den Merkmalen der unabhängigen Ansprüche. Bevorzugte Ausgestaltungen sind Gegenstand der Unteransprüche.

Erfindungsgemäß ist vorgesehen, dass während des Fahrbetriebs mit aktivierter, auf einen am Sollwertgeber auf einen Geschwindigkeitssollwert S1 eingestellter Geschwindigkeitsregelanlage zudem eine zulässige Höchstgeschwindigkeit selbsttätig erfasst wird. Diese Höchstgeschwindigkeit wird dem Fahrer als Empfehlung zur direkten Übernahme als neuer Geschwindigkeitssollwert S2 mitgeteilt. Zudem wird ein betätigbares Schaltelement für eine solche direkte Übernahme als neuer Geschwindigkeitssollwert S2 aktiviert. Eine solche selbsttätig erfasste Höchstgeschwindigkeit wird somit dem Fahrer sofort mitgeteilt und dadurch zur Übernahme als neuer Geschwindigkeitssollwert S2 empfohlen. Der Fahrer kann nun entscheiden, ob er dieser Empfehlung folgt und zweckmäßig das für eine Übernahme vorbereitete und aktivierte Schaltelement betätigen soll.

Nach Betätigung des Schaltelements durch den Fahrer ist dann schnell und ohne komplizierte mehrfache Handlungen des Fahrers der neue Geschwindigkeitssollwert S2 entsprechend der aktuell zulässigen Höchstgeschwindigkeit direkt an der Geschwindigkeitsregelanlage eingestellt und vorgegeben.

Damit ist die Geschwindigkeitsregelanlage auch bei Geschwindigkeitsbeschränkungen einfach und komfortabel bedienbar.

Wenn der Fahrer mit der Geschwindigkeitsregelanlage ohnehin mit einer Sollgeschwindigkeit unterhalb einer aktuell erfassten zulässigen Höchstgeschwindigkeit fährt, braucht diese als Empfehlung für eine Übernahme als Sollwert gegebenenfalls nicht mitgeteilt werden, außer es war vorher eine niedrigere zulässige Höchstgeschwindigkeit erfasst und übernommen worden.

Nach einer erfassten Aufhebung der aktuellen zulässigen Höchstgeschwindigkeit und einem Fahrbetrieb mit dem zugeordneten Geschwindigkeitssollwert S2 werden dem Fahrer zweckmäßig als Empfehlung zu einer direkten entsprechenden Übernahme als neuer Geschwindigkeitssollwert zwei Möglichkeiten angegeben:
Entweder wird der vorher eingestellte und zwischenzeitlich gespeicherte Geschwindigkeitssollwert S1 angezeigt und für eine Übernahme vorbereitet. Alternativ dazu wird eine neue aktuell erfasste zulässige Höchstgeschwindigkeit als neuer Geschwindigkeitssollwert S3 angezeigt, wenn auch diese Höchstgeschwindigkeit unter dem Wert des ursprünglich eingestellten Geschwindigkeitssollwerts S1 liegt.

Die vorstehenden erfindungsgemäßen Maßnahmen zur direkten Übernahme von Geschwindigkeitssollwerten in Verbindung mit Geschwindigkeitsbeschränkungen können sowohl bei "einfachen" Geschwindigkeitsregelanlagen als auch bei adaptiven Geschwindigkeitsregelanlagen (ACC) verwendet werden. Ebenso können Geschwindigkeitsbeschränkungen und aufhebungen gegebenenfalls auch aus anderen Verkehrszeichen ableitbar sein, zum Beispiel aus Ortseingangs- und Ortsausgangsschildern, um nur ein weiteres Beispiel zu nennen.

Es ist bereits bekannt, mittels Frontkameras am Kraftfahrzeug Verkehrszeichen zu erfassen und gegebenenfalls angezeigte Geschwindigkeitsbeschränkungen und -aufhebungen als Daten im Fahrzeug aufzubereiten und zur Verfügung zu stellen. Diese Informationen können in Verbindung mit der Geschwindigkeitsregelanlage als Empfehlungen für Sollwertübernahmen mitgeteilt werden. Zusätzlich oder alternativ können zulässige Höchstgeschwindigkeiten auch in allgemein bekannter Weise als Informationen aus Kartendaten eines Navigationssystems entnommen werden.

Eine Sollwertempfehlung kann einem Fahrer einfach und deutlich mittels einer digitalen und/oder analogen Sollwertanzeige mitgeteilt werden. Dies kann auch in Verbindung mit einem Blinkvorgang und/oder einer auffallenden Farbgebung sowie einem akustischen und/oder visuellen und/oder haptischen Signal erfolgen.

Das für eine Übernahme eines empfohlenen Geschwindigkeitssollwerts scharf geschaltete und aktivierte Schaltelement kann einfach als vom Fahrer zu betätigender Taster gegebenenfalls am Sollwertgeber ausgebildet sein.

Eine bevorzugte Verwendung ist in Verbindung mit einem Nutzfahrzeug vorgesehen.

Anhand einer Zeichnung wird die Erfindung weiter erläutert.

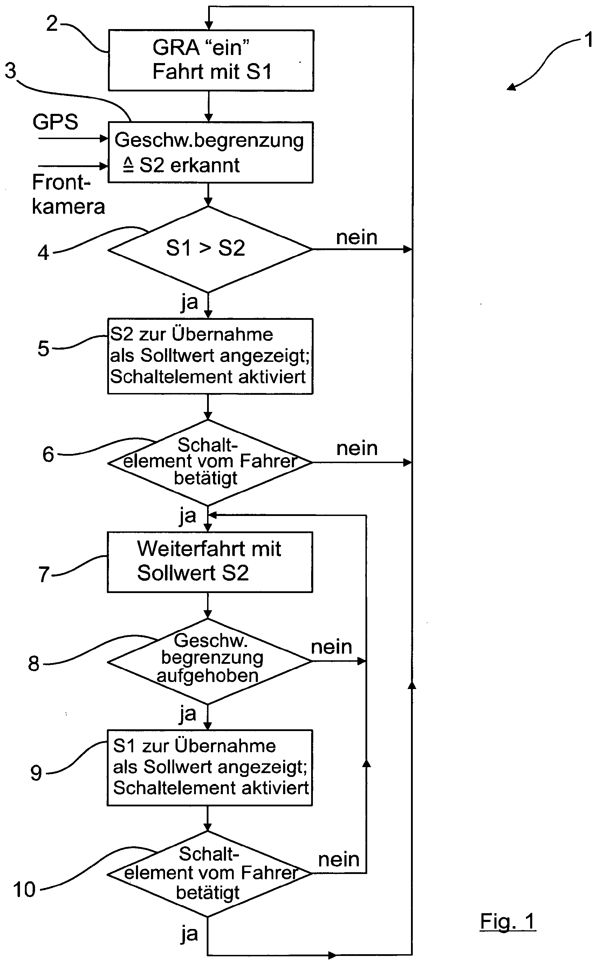

Die einzige Figur zeigt ein Flussdiagramm für einen beispielhaften Betrieb einer Geschwindigkeitsregelanlage:
Im Flussdiagramm 1 wird im ersten Block 2 festgestellt, dass die Geschwindigkeitsregelanlage GRA eingeschaltet ist und das Fahrzeug mit einem vom Fahrer individuell eingestellten Geschwindigkeitssollwert S1 fährt.

Im nachgeordneten Block 3 ist angegeben, dass aktuell eine Geschwindigkeitsbegrenzung auf eine zulässige Höchstgeschwindigkeit erkannt wurde, welche einem zugeordneten Geschwindigkeitssollwert S2 entspricht. Die Geschwindigkeitsbegrenzung wurde aus dem Datensatz eines Navigationssystems (GPS) entnommen und/oder mittels einer Frontkamera erfasst und ausgewertet.

An der nachfolgenden Verzweigungsstelle 4 wird überprüft, ob die ursprüngliche Sollgeschwindigkeit mit dem Geschwindigkeitssollwert S1 größer als der Wert der erfassten Geschwindigkeitsbegrenzung entsprechend S2 ist. Wenn dies nicht der Fall ist, wird das Fahrzeug mit der ursprünglichen Sollgeschwindigkeit S1 weitergefahren. Ist S1 größer als S2, wird entsprechend dem Block 5 der Wert der erfassten zulässigen Höchstgeschwindigkeit als neuer Geschwindigkeitssollwert S2 zur Übernahme durch den Fahrer angezeigt und empfohlen. Zugleich wird ein dazu betätigbares Schaltelement aktiviert und scharf geschaltet.

Nachfolgend wird an der Verzweigungsstelle 6 ermittelt, ob der Fahrer der Empfehlung gefolgt und durch Betätigung des Schaltelements den empfohlenen neuen Geschwindigkeitssollwert S2 eingestellt hat. Wenn ja, erfolgt gemäß Block 7 die Weiterfahrt mit dem neuen Geschwindigkeitssollwert S2 entsprechend der festgestellten zulässigen Höchstgeschwindigkeit. Wenn der Fahrer das Schaltelement nicht betätigt hat und damit die Empfehlung zur Sollwertübernahme nicht angenommen hat, wird das Fahrzeug mit dem ursprünglichen Sollwert S1 weitergefahren.

In der Verzweigungsstelle 8 wird überprüft, ob die aktuelle Geschwindigkeitsbegrenzung wieder aufgehoben wurde. Falls nicht, erfolgt die Weiterfahrt mit dem Geschwindigkeitssollwert S2. Wenn eine Aufhebung der Geschwindigkeitsbegrenzung insbesondere mittels GPS-Daten oder Frontkamerainformationen festgestellt wird, erfolgt gemäß Block 9 wiederum eine Anzeige und Übernahmeempfehlung für den zwischenzeitlich gespeicherten ursprünglichen Geschwindigkeitssollwert S1 (oder gegebenenfalls für eine neue erfasste zulässige Höchstgeschwindigkeit). Zugleich wird auch wieder das Schaltelement für eine Übernahme aktiviert und scharf geschaltet.

An der nachfolgenden Verzweigungsstelle 10 wird ermittelt, ob der Fahrer dieser Empfehlung durch Betätigung des Schaltelements gefolgt ist. Wenn nicht, wird die Geschwindigkeitsregelanlage GRA weiter mit dem bisherigen reduzierten Geschwindigkeitssollwert S2 betrieben. Wenn der Fahrer die Empfehlung annimmt wird auf den ursprünglichen Geschwindigkeitssollwert S1 geschaltet und das Fahrzeug mit einer Geschwindigkeit wie vor der Geschwindigkeitsbegrenzung weitergefahren.

### Bezugszeichenliste

- 1: Flussdiagramm
- 2: Block
- 3: Block
- 4: Verzweigungsstelle
- 5: Block
- 6: Verzweigungsstelle
- 7: Block
- 8: Verzweigungsstelle
- 9: Block
- GRA: Geschwindigkeitsregelanlage
- S1: Geschwindigkeitssollwert
- S2: Geschwindigkeitssollwert
- GPS: Navigationssystem

## Patentansprüche

1. Verfahren zur Verwendung einer Geschwindigkeitsregelanlage in einem Kraftfahrzeug,
mit einem von einem Fahrer an einem Sollwertgeber einstellbaren Geschwindigkeitssollwert,
wobei während des Fahrbetriebs mit aktivierter, auf einen am Sollwertgeber auf einen Geschwindigkeitssollwert (S1) eingestellter Geschwindigkeitsregelanlage (GRA) zudem eine erste zulässige Höchstgeschwindigkeit selbsttätig erfasst wird,
wobei diese erste zulässige Höchstgeschwindigkeit dem Fahrer als Empfehlung zur direkten Übernahme als neuer Geschwindigkeitssollwert (S2) mitgeteilt wird,
wobei zudem ein betätigbares Schaltelement für eine solche direkte Übernahme als neuer Geschwindigkeitssollwert (S2) aktiviert wird, und
wobei nach Betätigung des Schaltelements durch den Fahrer der neue Geschwindigkeitssollwert (S2) entsprechend der ersten, das heißt aktuell zulässigen Höchstgeschwindigkeit direkt an der Geschwindigkeitsregelanlage (GRA) eingestellt und vorgegeben wird, **dadurch gekennzeichnet, dass** die erste zulässige Höchstgeschwindigkeit dem Fahrer zur Übernahme als neuer Geschwindigkeitssollwert (S2) nur mitgeteilt und das betätigbare Schaltelement nur aktiviert wird, wenn der Wert der ersten zulässigen Höchstgeschwindigkeit unter dem vom Fahrer aktuell eingestellten Geschwindigkeitssollwert (S1) liegt, außer es war vorher eine zweite zulässige Höchstgeschwindigkeit erfasst und übernommen worden, die niedriger ist als die erste zulässige Höchstgeschwindigkeit.

2. Verfahren nach Anspruch 1, **dadurch gekennzeichnet,**
**dass** nach einer erfassten Aufhebung der ersten, das heißt aktuell zulässigen Höchstgeschwindigkeit und einem Fahrbetrieb mit dem zugeordneten Geschwindigkeitssollwert (S2) dem Fahrer als Empfehlung zu einer direkten entsprechenden Übernahme als neuer Geschwindigkeitssollwert entweder
- der vorher eingestellte gespeicherte Geschwindigkeitssollwert (S1) zur Übernahme angezeigt wird,
oder
- eine neu erfasste zulässige Höchstgeschwindigkeit als neuer Geschwindigkeitssollwert (S3) zur Übernahme angezeigt wird, wenn auch diese neu erfasste zulässige Höchstgeschwindigkeit unter dem Wert des ursprünglich eingestellten Geschwindigkeitssollwerts (S1) liegt.

3. Verfahren nach Anspruch 1 oder 2, **dadurch gekennzeichnet, dass** die Geschwindigkeitsregelanlage (GRA) als Abstandsregeltempomat (ACC = Adaptive Cruise Control) ausgebildet ist und bei der Geschwindigkeitsregelung der Abstand zu einem vorausfahrenden Fahrzeug als zusätzliche Stellgröße mit einbezogen wird.

4. Verfahren nach einem der Ansprüche 1 bis 3, **dadurch gekennzeichnet, dass** die zulässigen Höchstgeschwindigkeiten durch Auswertung von Informationen aus Frontkameras am Kraftfahrzeug erfasst werden, wobei mittels der Frontkameras Verkehrszeichen erkannt werden, die Geschwindigkeitsbeschränkungen und -aufhebungen beinhalten, oder aus denen Geschwindigkeitsbeschränkungen und -aufhebungen ableitbar sind, und/oder dass die zulässigen Höchstgeschwindigkeiten als Informationen zu Geschwindigkeitsbegrenzungen aus Kartendaten eines Navigationssystems entnommen werden.

5. Verfahren nach einem der Ansprüche 1 bis 4, **dadurch gekennzeichnet, dass** eine Sollwertempfehlung einem Fahrer durch eine digitale und/oder analoge Sollwertanzeige mitgeteilt wird, vorzugsweise in Verbindung mit einem Blinkvorgang und/oder einer definierten Farbgebung und/oder in Verbindung mit einem akustischen und/oder visuellen und/oder haptischen Signal.

6. Verfahren nach einem der Ansprüche 1 bis 5, **dadurch gekennzeichnet, dass** das zur Übernahme eines empfohlenen Geschwindigkeitssollwerts betätigbare Schaltelement als Taster, vorzugsweise am Sollwertgeber, ausgebildet ist.

7. Fahrzeug, insbesondere Nutzfahrzeug, mit einer Geschwindigkeitsregelanlage eingerichtet zur Durchführung eines Verfahrens nach einem der vorhergehenden Ansprüche.

## Claims

1. Method for using a cruise control system in a motor vehicle,
with a speed setpoint that is able to be set by a driver on a setpoint generator,
wherein, during the driving operation with an activated cruise control system (GRA) set to a speed setpoint (S1) on the setpoint generator, a first permissible maximum speed is additionally automatically detected,
wherein this first permissible maximum speed is communicated to the driver as a recommendation for immediate adoption as new speed setpoint (S2),
wherein an actuatable switching element is additionally activated for such immediate adoption as new speed setpoint (S2), and
wherein, after the switching element has been actuated, the new speed setpoint (S2), which corresponds to the first, that is to say currently permissible maximum speed, is set and specified by the driver immediately on the cruise control system (GRA), **characterized in that** the first permissible maximum speed is communicated to the driver for adoption as new speed setpoint (S2) and the actuatable switching element is activated only if the value of the first permissible maximum speed is below the speed setpoint (S1) currently set by the driver, unless a second permissible maximum speed, which is lower than the first permissible maximum speed, had been detected and adopted previously.

2. Method according to Claim 1, **characterized**
**in that**, after a detected cancellation of the first, that is to say currently permissible maximum speed and a driving operation with the assigned speed setpoint (S2),
displayed to the driver, as a recommendation for immediate and appropriate adoption as new speed setpoint, is either
- the previously set stored speed setpoint (S1) for adoption,
or
- a newly detected permissible maximum speed for adoption as new speed setpoint (S3) even if this newly detected permissible maximum speed is below the value of the originally set speed setpoint (S1).

3. Method according to Claim 1 or 2, **characterized in that** the cruise control system (GRA) is in the form of an adaptive cruise control (ACC) system and, during the cruise control, the distance to a vehicle ahead is included as an additional manipulated variable.

4. Method according to one of Claims 1 to 3, **characterized in that** the permissible maximum speeds are detected by evaluating information from front cameras on the motor vehicle, wherein the front cameras identify traffic signs which contain speed limits and cancellations of speed limits or from which speed limits and cancellations of speed limits are able to be deduced, and/or **in that** the permissible maximum speeds are gathered from map data of a navigation system as information pertaining to speed limits.

5. Method according to one of Claims 1 to 4, **characterized in that** a setpoint recommendation is communicated to a driver by way of a digital and/or analogue setpoint display, preferably in conjunction with a flashing indicator operation and/or a defined colouring and/or in conjunction with an acoustic and/or visual and/or haptic signal.

6. Method according to one of Claims 1 to 5, **characterized in that** the actuatable switching element for adopting a recommended speed setpoint is in the form of a pushbutton, preferably on the setpoint generator.

7. Vehicle, in particular commercial vehicle, having a cruise control system that is configured to carry out a method according to one of the preceding claims.

## Revendications

1. Procédé pour utiliser un équipement de régulation de vitesse dans un véhicule à moteur,
avec une vitesse de consigne réglable par un conducteur sur un transmetteur de valeur de consigne,
pendant le régime de déplacement avec un équipement de régulation de vitesse (GRA) activé à une vitesse de consigne (S1) réglée sur le transmetteur de valeur de consigne, une première vitesse maximale autorisée étant en outre acquise automatiquement,
la première vitesse maximale autorisée étant communiquée au conducteur en tant que recommandation en vue d'une prise en charge directe comme nouvelle vitesse de consigne (S2),
un élément de commutation actionnable pour une telle prise en charge directe comme nouvelle vitesse de consigne (S2) étant en outre activé, et
après l'activation de l'élément de commutation par le conducteur, la nouvelle vitesse de consigne (S2) est réglée et prédéfinie directement sur l'équipement de régulation de vitesse (GRA) conformément à la première, c'est-à-dire l'actuelle vitesse maximale autorisée, **caractérisé en ce que** la première vitesse maximale autorisée n'est communiquée au conducteur en vue d'une prise en charge comme nouvelle vitesse de consigne (S2) et l'élément de commutation actionnable n'est activé que si la valeur de la première vitesse maximale autorisée est inférieure à la vitesse de consigne (S1) réglée actuellement réglée par le conducteur, sauf si une deuxième vitesse maximale autorisée été acquise et prise en charge précédemment, laquelle est inférieure à la première vitesse maximale autorisée.

2. Procédé selon la revendication 1, **caractérisé en ce**
**qu'**après une annulation de la première, c'est-à-dire l'actuelle vitesse maximale autorisée et un régime de déplacement avec la vitesse de consigne (S2) attribuée, en tant que recommandation au conducteur pour une prise en charge directe correspondante comme nouvelle vitesse de consigne, soit
- est affichée la vitesse de consigne (S1) mémorisée réglée précédemment pour prise en charge,
soit
- est affichée une nouvelle vitesse maximale autorisée comme nouvelle vitesse de consigne (S3) pour prise en charge, si cette nouvelle vitesse maximale autorisée acquise est inférieure à la valeur de la vitesse de consigne (S1) réglée initialement.

3. Procédé selon la revendication 1 ou 2, **caractérisé en ce que** l'équipement de régulation de vitesse (GRA) est réalisé sous la forme d'un radar de régulation de distance (ACC = Adaptative Cruise Control) et, lors de la régulation de vitesse, la distance par rapport à un véhicule qui précède est incluse en tant que grandeur de commande supplémentaire.

4. Procédé selon l'une des revendications 1 à 3, **caractérisé en ce que** les vitesses maximales autorisées supplémentaires sont acquises en interprétant des informations provenant de caméras frontales sur le véhicule à moteur, des panneaux de circulation étant reconnus au moyen des caméras frontales, lesquels contiennent des limitations et des annulations de limitation de vitesse, ou à partir desquels peuvent être dérivées des limitations et des annulations de limitation de vitesse, et/ou **en ce que** les vitesses maximales autorisées supplémentaires sont prélevées en tant qu'informations à propos des limitations de vitesse des données cartographiques d'un système de navigation.

5. Procédé selon l'une des revendications 1 à 4, **caractérisé en ce qu'**une recommandation de valeur de consigne est communiquée à un conducteur par un indicateur numérique et/ou analogique de valeur de consigne, de préférence en association avec une opération de clignotement et/ou une coloration définie et/ou en association avec un signal sonore et/ou visuel et/ou haptique.

6. Procédé selon l'une des revendications 1 à 5, **caractérisé en ce qu'**un élément de commutation actionnable destiné à la prise en charge d'une vitesse de consigne recommandée est réalisé sous la forme d'une touche, de préférence sur le transmetteur de valeur de consigne.

7. Véhicule, notamment véhicule utilitaire, comprenant un équipement de régulation de vitesse destiné à mettre en oeuvre un procédé selon l'une des revendications précédentes.
